# EUROPÄISCHE PATENTSCHRIFT

(11) **EP 1 515 073 B1**
(45) Veröffentlichungstag und Bekanntmachung des Hinweises auf die Patenterteilung: **13.06.2007**
(21) Anmeldenummer: 03405670.5
(22) Anmeldetag: 12.09.2003
(51) Int. Cl.: F16K 27/00, F16K 11/14

(54) **Mehrwege-Ventilanordnung**
Multiple way valve
Vanne à voies multiples

(43) Veröffentlichungstag der Anmeldung: 16.03.2005
(73) Patentinhaber: Daniel Burkhalter (Dipl. Ing.), 9555 Tobel (CH)
(72) Erfinder: Daniel Burkhalter (Dipl. Ing.), 9555 Tobel (CH)
(74) Vertreter: Müller, Christoph Emanuel

(56) Entgegenhaltungen:
- US-A- 4 357 952
- US-A1- 2001 011 557
- US-A1- 2003 000 585
- DATABASE WPI Section PQ, Week 198248 Derwent Publications Ltd., London, GB; Class Q66, AN 1982-A3345J XP002268604 & DE 31 18 471 A (BORBELY G, SCHMIDT REUTER ING) 25. November 1982 (1982-11-25)

## Beschreibung

Die Erfindung betrifft eine Mehrwege-Ventilanordnung, ein Verfahren zur Durchflussregelung sowie die Verwendung einer Mehrwege-Ventilanordnung gemäss dem Oberbegriff des unabhängigen Patentanspruchs.

In der Heizungs- und Lüftungstechnik, der Bewässerungstechnik und der Rezeptursteurung in der Verfahrenstechnik werden zur Durchflussregelung zumeist Ventile verschiedenster Bauart, insbesondere Schiebe- und sonstige Blendenventile, sowie Magnetventile und Kugelventile verwendet. Insbesondere bei Heiz- und Kühlsystemen ist es häufig notwendig und erwünscht, ausgehend von einer zentralen Zufuhr bzw. einer zentralen Abfuhr mehrere zu heizende oder zu kühlende Teilbereiche separat und unabhängig voneinander zu regeln, so beispielsweise bei der Heizung / Lüftung von verschiedenen Räumen eines Hauses. Für derartige Anwendungen werden heute zumeist separat regulierbare Ventile eingesetzt, wobei alle Ventile jeweils über sämtliche zur Regelung notwendigen mechanischen und/oder elektrischen Vorrichtungen verfügen. Hierdurch ist zwar ein modularer Aufbau einer Mehrwege-Ventilanordnung möglich. Es resultiert jedoch ein hoher apparativer Aufwand aufgrund der vollständig autonomen Konstruktion einzelner Ventile. Hierdurch sind sowohl die Kosten als auch der Platzbedarf eines solchen Systems unvorteilhaft.

Das Dokument DE 31 18 471 C1 offenbart einen Fluidverteiler mit zwei Ventilgehäusen, zwischen denen sich eine Antriebseinrichtung befindet. Das erste Ventilgehäuse ist über eine Einlassleitung und das zweite Ventilgehäuse über eine Auslassleitung mit einem Wärmeverbraucher verbunden. Die Antriebseinrichtung ist derart betätigbar, dass jeweils eine von mehreren Anschlusseinheiten an beiden Ventilgehäusen über die Ein- und Auslassleitung mit dem Wärmeverbraucher verbindbar ist, beispielsweise gemäss einem speziellen Zeitprogramm und/oder der Stellung eines Thermostaten. Nachteilig an diesem System ist einerseits die eingeschränkte Erweiterbarkeit. Zudem kann jeweils lediglich eine Einlass- und Auslassleitung mit dem Wärmeverbraucher verbunden werden. Darüber hinaus ist für jede Anschlusseinheit in beiden Ventilgehäusen je ein schaltbares Ventil vorgesehen, was ebenfalls einen erhöhten konstruktiven Aufwand bedeutet.

US 2001/0011557 zeigt ein Ventilglied für eine Mehrventilanordnung, das unter einem vorgegebenen Winkel mit einem baugleichen Ventilglied anschliessbar ist bzw. Betätigungsmittel weiterer Ventilglieder unter einem Winkel verdreht anschliessbar sind. Das Ventilglied besitzt einen verdrehbaren Innenkörper, der über einen Schaft an weitere Innenkörper und an einen Antrieb koppelbar ist.

Es ist daher eine Aufgabe der Erfindung, die Nachteile des bekannten zu vermeiden, insbesondere also ein Ventilglied insbesondere für eine Mehrwege-Ventilanordnung bereitzustellen, welches mechanisch simpel aufgebaut und leicht an spezielle Anforderungen der jeweils zu regelnden Anlage anpassbar ist.

Darüber hinaus ist es ebenfalls eine Aufgabe der Erfindung, eine Mehrwege-Ventilanordnung bereitzustellen, welche konstruktiv einfach gestaltet ist und welche mit möglichst wenigen Steuerungs- und Regelvorrichtungen auskommt.

Insbesondere ist es auch eine Aufgabe der Erfindung, eine Mehrwege-Ventilanordnung zu schaffen, mit welcher es möglich ist, mehrere Anschlusseinheiten assoziativ, also in Abhängigkeit von und gleichzeitig mit anderen Anschlusseinheiten zu regeln, ohne dass sich eine erhöhte Komplexität der Konstruktion ergibt.

Es ist eine weitere Aufgabe der Erfindung, ein Ventilglied zu schaffen, welches kostengünstig herstellbar ist.

Die genannten Aufgaben werden erfindungsgemäss gelöst durch, eine Mehrwege-Ventilanordnung, einem Verfahren zur Durchflussregelung sowie der Verwendung einer Mehrwege-Ventilanordnung mit den Kennzeichen der unabhängigen Patentansprüche.

Die Erfindung betrifft eine Mehrwege-Ventilanordnung zur Durchflussregelung, mit mindestens zwei Ventilgliedern, und mit Betätigungsmitteln zum Betätigen der Ventilglieder, wobei die Betätigungsmittel und die Ventilglieder derart angeordnet sind, dass in Abhängigkeit von der Position der Betätigungsmittel, insbesondere in Abhängigkeit von dem Winkelbetrag einer Drehung der Betätigungsmittel, wenigstens ein Ventilglied beliebig anwählbar und betätigbar ist. Dadurch ist es möglich, mit einem einzigen Antrieb mehrere Ventile zu regeln oder zu steuern. Hierdurch ist es insbesondere ermöglicht, Ventilglieder in beliebiger Reihenfolge, unabhängig von seiner Position innerhalb einer Mehrwege-Ventilanordnung, zu betätigen. Selbstverständlich ist es möglich, die Position der Betätigungsmittel sowohl durch Drehung als auch Verschiebung zu wählen: wesentlich ist, dass hierdurch jedenfalls ein beliebiges Ventilglied anwählbar und betätigbar ist.

In einer besonders vorteilhaften Ausführungsform sind die Ventilglieder über eine erste Anschlussseite und eine zweite Anschlussseite miteinander unter einem Winkel α bzw. einem Vielfachen des Winkels α gegeneinander verdreht miteinander verbunden.

In einer bevorzugten Ausführungsform ist eine zentrale, insbesondere aus Teilbereichen einzelner Ventilglieder gebildete Achse vorgesehen ist, welche die Ventilglieder durchdringt, und mittels welcher einzelner Ventilglieder selektiv ansteuerbar und betätigbar sind. Mittels einer zentralen Achse kann insbesondere bei rohrförmigen Ventilgliedern eine einfache Ansteuerung und Betätigung bewirkt werden. Die einzelnen Ventilglieder können vorteilhafterweise jeweils einen Teilbereich der Achse beinhalten, wodurch ein modularer Aufbau einer Mehrwege-Ventilanordnung erleichtert wird.

In einer solchen Mehrwege-Ventilanordnung können bevorzugt an der Achse angeordnete Kupplungsvorrichtungen vorgesehen sein, welche derart kompatibel zu insbesondere an Innenkörpern der jeweiligen Ventilglieder angeordneten Mitnehmern ausgebildet sind, dass eine selektive Verstellung der Betriebspositionen der einzelnen Ventilglieder bewirkbar ist. Hierbei ist es besonders vorteilhaft, Mitnehmer und Kupplungsvorrichtung reversibel ein- und auskuppelbar auszubilden.

In einer weiteren Auführungsform ist der Durchfluss durch einzelne Ventilglieder einer Mehrwege-Ventilanordnung durch Einkopplung und Drehung der Achse in einem Winkelbereich, insbesondere einem Teilbereich einer vollen Umdrehung der Achse, regelbar. Dies kann besonders einfach bewirkt werden, indem die Achse bspw. im Verbindungsbereich als Steckverbindung ausgebildet ist, welche aus einem Innenvielkant und einem Aussenvielkant aufgebaut ist. Durch die Anzahl der Innen- und Aussenkanten ist der Winkel α bestimmt: Im Falle eines Sechskants beträgt der Winkel α also 60° (360°/6). Hierdurch ergibt sich für einzelne Ventilglieder ein jeweils nutzbarer Verstellbereich von 60°, also z.B. 0° bis 60° für Ventilglied 1, 60° bis 120° für Ventilglied 2, usw.. Selbstverständlich ist es jedoch auch möglich, eine weitere, separat regelbare Einstellmöglichkeit der Winkelbereiche vorzusehen, beispielsweise durch eine Verstellbarkeit der Kupplungsvorrichtung auf der Achse. Durch Drehung der Achse innerhalb des jeweils einem, optional auch mehreren Ventilgliedern zugeordneten Winkelbereichs wird das Verstellen des bzw. der Ventilglieder bewirkt. Selbstverständlich ist es besonders vorteilhaft auch möglich, für spezielle Anwendungen mehrere Ventilglieder einem Winkelbereich zuzuordnen, falls eine identische Regelung dieser Ventilglieder gewünscht ist.

Die Verbindung einzelner Ventilglieder und ggf. eines Anschlussteils und/oder eines Abschlussteils einer Mehrwege-Ventilanordnung ist bevorzugt über eine insbesondere aussenliegende Gewindestange bewirkt. Hierzu kann bspw. in den Ventilgehäusen und dem Anschlussteil bzw. Abschlussteil eine in einem Aussenbereich angeordnete Bohrung in einer Richtung parallel zu der drehbaren Achse vorgesehen sein. Durch eine solche Gewindestange können die einzelnen Komponenten verspannt werden. Eine solche Verbindung ist einerseits zuverlässig, gewährleistet aber auch eine optimale Zugänglichkeit und Lösbarkeit im Falle von Reparaturen und/oder Erweiterungen der Mehrwege-Ventilanordnung. Zwischen den einzelnen Komponenten können an sich bekannte Dichtmittel vorgesehen sein.

In einer besonders bevorzugten Ausführungsform ist die Achse in Längsrichtung insbesondere gegen ein vorzugsweise innerhalb eines Abschlussteils vorgesehenes Rückstellmittel verschiebbar ausgebildet. Das Abschlussteil wirkt zudem als Lager für die Achse. Durch das Rückstellmittel kann ein Ein- und Auskuppeln der insbesondere an der Achse angeordneten Kupplungsvorrichtung bewirkt werden. Als Rückstellmittel kann bspw. eine Feder oder eine sonstige Vorrichtung mit ausreichender Rückstellkraft vorgesehen sein. Das Rückstellmittel gewährleistet eine Rückstellung der Kupplungsvorrichtung in eine ausgekoppelte Position, wenn keine Kraft auf die Achse in Richtung des Rückstellmittels aufgewendet wird.

Es ist insbesondere bevorzugt, dass die Mehrwege-Ventilanordnung über ein Anschlussteil verfügt, welches eine Positioniervorrichtung zur Drehung der die Ventilglieder durchdringenden Achse sowie einen Positioniervorrichtung zum Verschieben der Achse in Richtung ihrer Längsachse beinhaltet. Als Postioniervorrichtungen können selbstverständlich alle an sich für solche zu erzielenden Bewegungen bekannten Vorrichtungen verwendet werden. Besonders bevorzugt werden Schrittmotoren verwendet. Es ist besonders vorteilhaft, Längsbewegungen der Achse aus dem Ventilgehäuse bzw. dem Anschluss- und/oder Abschlussteil heraus zu vermeiden, da hierdurch die Abdichtung erschwert ist und zumeist nicht dauerhaft gewährleistet werden kann. Vielmehr ist es bevorzugt, insbesondere die Verschiebung der Achse über eine Drehbewegung um eine Hilfsachse zu bewirken, welche orthogonal zur die Ventilglieder durchdringenden Achse angeordnet ist. Hierbei haben sich insbesondere Vorrichtungen bewährt, welche eine Verschiebung mittels eines drehbaren Exzenters bewirken.

Für besondere Anwendungen kann zudem sowohl der Zufluss auch der Abfluss eines zu regelnden Gesamtsystems über Ventilglieder einer einzigen Mehrwege-Ventilanordnung regelbar ausgebildet sein. Hierdurch kann die Variabilität und Kontrolle einer Mehrwege-Ventilanordnung nochmals erhöht werden, ohne dass ein wesentlich erhöhter Platz- oder Materialaufwand nötig wäre.

Ein zentrales Anschlussteil einer Mehrwege-Ventilanordnung beinhaltet bevorzugt neben den Positioniervorrichtungen zum Drehen und Verschieben der Achse auch einen zentralen Zulauf sowie eine Durchflussmessvorrichtung und die gesamte notwendige Steuerungselektronik und Stromversorgung.

Eine erfindungsgemässe Mehrwege-Ventilanordnung verfügt über eine erste Anschlussseite und eine zweite Anschlussseite des Ventilglieds zum Anschluss weiterer, insbesondere baugleicher Ventilglieder, wobei die Anschlussseiten derart ausgebildet sind, dass weitere Ventilglieder unter einem vorgegebenen Winkel α bzw. einem Vielfachen des Winkels α gegeneinander verdreht anschliessbar sind. Unter einer Anschlussseite werden hier und im folgenden im wesentlichen die gesamten Kontaktbereiche eines Ventilglieds verstanden, an welchen weitere Elemente der Ventilanordnung angeschlossen werden können. Hierbei kann es sich um einen Anschluss durch jegliche Art von Verbindung handeln, solange eine Dichtigkeit gegenüber dem für die Verwendung der Ventilandordnung vorgesehenen Medium gewährleistet ist, beispielsweise also Spannverbindungen, Schraubverbindungen, Verschweissungen, etc.. Es ist möglich, eine solche Mehrwege-Ventilanordung modular aufzubauen, wobei vorteilhafterweise baugleiche Ventilglieder eingesetzt werden können. Durch die um einen Winkel α bzw. einem Vielfachen des Winkels α gegeneinander verdrehte Verbindung einzelner Ventilglieder kann gewährleistet werden, dass in Abhängigkeit des Winkels α ein bzw. ggf. mehrere bestimmte Ventilglieder mit einer einzigen mechanischen Steuerung ausgewählt und betätigt werden. Der konstruktive Aufwand kann erheblich minimiert werden, da baugleiche Ventilglieder verwendet werden können. Zusätzlich oder alternativ kann das Ventilglied derart ausgebildet sein, dass Betätigungsmittel weiterer Ventilglieder (1) unter einem Winkel α bzw. einem Vielfachen des Winkels α gegeneinander verdreht anschliessbar sind. Unter Betätigungsmitteln werden hier und im folgenden jene Komponenten verstanden, welche das Öffnen und Schliessen des Ventils bewirken, insbesondere Kupplungsvorrichtungen, mittels welchen eine Blende verstellbar ist. Falls derartige Betätigungsmittel unter einem Winkel α bzw. einem Vielfachen des Winkels α gegeneinander verdreht anschliessbar sind, kann auch hierdurch in Abhängigkeit des Winkels α ein bzw. ggf. mehrere bestimmte Ventilglieder mit einer einzigen mechanischen Steuerung ausgewählt und betätigt werden.

In einer bevorzugten Ausführungsform verfügt das Ventilglied über ein zumindest teilweise zu der ersten Anschlussseite und der zweiten Anschlussseite offenes Ventilgehäuse sowie einen gegen das Ventilgehäuse verdrehbaren Innenkörper, wobei der Innenkörper über mindestens eine Durchtrittsöffnung verfügt, welche mit mindestens einer Durchtrittsöffnung des Ventilgehäuses in zumindest teilweise Überlappung gebracht werden kann. Vorzugsweise ist das Ventilglied rohrförmig ausgebildet, wobei der Aussendurchmesser des Innenkörpers im wesentlichen dem Innendurchmesser des Ventilgehäuses entspricht. Durch die Verdrehbarkeit des Innenkörpers gegenüber dem Ventilgehäuse ist eine mechanisch besonders einfache Betätigung des Ventils möglich. Falls notwendig, können selbstverständlich zur Gewährleistung der Dichtigkeit zwischen Innenkörper und Ventilgehäuse an sich bekannte Vorkehrungen getroffen werden, bspw. presspassgenauer Sitz, Dichtungen, etc..

Gemäss einer weiteren Ausführungsform ist der Innenkörper gegenüber dem Ventilgehäuse mittels eines an dem Innenkörper angeordneten Mitnehmers, insbesondere lediglich auf einen Teilbereich einer vollen Umdrehung begrenzt, verdrehbar. Ein Mitnehmer an dem Innenkörper ermöglicht eine einfache Verdrehbarkeit des Innenkörpers, da dieser von geeigneten Mitteln erfasst und der Innenkörper so verdreht werden kann. Vorteilhafterweise ist die Verdrehbarkeit des Innenkörpers gegenüber dem Ventilgehäuse lediglich auf einen Teilbereich einer vollen Umdrehung begrenzt, insbesondere auf den Winkelbetrag, der notwendig ist, um sowohl vollständige Öffnung als auch vollständigen Verschluss des Ventilglieds bewirken zu können. Eine derartige Begrenzung der Verdrehbarkeit kann durch an sich bekannte Mittel bewirkt werden, bspw. durch an dem Innenkörper und/oder dem Ventilgehäuse vorgesehene Anschläge.

Vorteilhafterweise ist der Mitnehmer in eine Kupplungsvorrichtung reversibel ein- und auskuppelbar ausgebildet. Als Kupplungsvorrichtung kann beispielsweise eine gabelartige Vorrichtung vorgesehen sein; der Mitnehmer kann dann bspw. als vorstehender Bolzen ausgebildet sein, welcher von einer gabelartigen Vorrichtung erfasst werden kann.

In einer besonders bevorzugten Ausführungsform ist die Kupplungsvorrichtung an einer Achse angeordnet ist, welche das Ventilglied von der ersten Anschlussseite zur zweiten Anschlussseite hin durchdringt. Eine derartige Anordnung ist konstruktiv besonders einfach. Selbstverständlich ist es allerdings erfindungsgemäss ebenfalls möglich, die Kupplungsvorrichtung an dem Innenkörper und den Mitnehmer an der Achse anzuordnen. Selbstverständlich ist es ebenfalls alternativ oder zusätzlich möglich, die Kupplungsvorrichtung verstellbar auf der Achse anzuordnen.

Der Durchfluss durch das Ventilglied ist bevorzugt durch Einkopplung der Kupplungsvorrichtung und danach Drehung der Achse in einem Winkelbereich regelbar. Der Winkelbereich ist insbesondere lediglich ein Teilbereich einer vollen Umdrehung der Achse. Der Winkelbereich eines Ventilglieds kann z.B. derart gewählt sein, dass durch Drehung der Achse sowohl vollständiges Öffnen als auch vollständiges Schliessen des Ventilglieds bewirkbar ist. Selbstverständlich ist es aber bspw. auch möglich, mittels Begrenzern, insbesondere Anschlägen, eine Mindestöffnung und/oder Maximalöffnung des Ventilglieds vorzusehen.

In einer weiteren, besonders bevorzugten Ausführungsform ist die Achse eines Ventilglieds derart ausgebildet, dass sie im Bereich der ersten Anschlussseite und/oder zweiten Anschlussseite mit der Achse mindestens eines weiteren Ventilglieds verbindbar ist. Dies ermöglicht einen vollständig modularen Aufbau einer Mehrwege-Ventilanordnung. Die Verbindung von Achsen zweier Ventilglieder kann in an sich bekannte Art und Weise erfolgen, bspw. mittels insbesondere verdrehgesicherten Steckverbindungen.

Gemäss einer besonders vorteilhaften Ausführungsform des Ventilglieds ist der Winkel α durch spezifisch komplementäre Bereiche der Ventilgehäuse und/oder der Achsen im Bereich der ersten Anschlussfläche und/oder der zweiten Anschlussfläche definiert, wobei die Kupplungsvorrichtung mindestens eines weiteren, insbesondere baugleichen Ventilglieds unter einem Winkel α bzw. einem Vielfachen des Winkel α verdreht gegenüber einer ersten Kupplungsvorrichtung anordbar sind. Die Achse kann bspw. im Verbindungsbereich als Steckverbindung ausgebildet sein, welche aus einem Innenvielkant und einem Aussenvielkant, vergleichbar einem Imbus aufgebaut ist. Durch die Anzahl der Innen- und Aussenkanten ist der Winkel α bestimmt: Im Falle eines Vierkants beträgt der winkel α also 90° (360°/4). Selbstverständlich können zusätzlich und/oder alternativ auch spezifisch komplementäre Bereiche an dem Ventilgehäuse vorgesehen sein.

Vorteilhafterweise bestehen das Ventilgehäuse und der Innenkörper aus Materialien mit gleichem Wärmeausdehnungskoeffizient, insbesondere aus dem gleichen Material, vorzugsweise aus insbesondere warm verformtem Messing. Hierdurch kann temperaturbedingten Fehlfunktionen des Ventilglieds infolge unterschiedlicher Wärmeausdehnung der einzelnen Komponenten vorgebeugt werden; eine einwandfreie Bedienbarkeit der Ventilglieder ist so unter allen Betriebsbedingungen gewährleistet.

Es ist besonders bevorzugt, dass der Innenkörper zwischen erster Anschlussseite und zweiter Anschlussseite gegen eine Spannvorrichtung verschiebbar ausgebildet ist. Bei einer solchen Spannverbindung kann es sich bspw. um eine Feder handeln. Mittels einer derartigen Spannvorrichtung können ggf. auftretende Schubkräfte bspw. beim Einkuppeln des Mitnehmers in die Kupplungsvorrichtung wirksam ausgeglichen werden. Auf der Anschlussseite, welche der Spannvorrichtung gegenüberliegt, kann der Innenkörper gegen eine Anschlagsfläche des Ventilgehäuses gelagert sein.

In einer weiteren Ausführungsform sind am Ventilgehäuse im Bereich der ersten Anschlussseite und/oder der zweiten Anschlussseite insbesondere separate Dichtanordnungen, vorzugsweise O-Ringe zum dichten Anschluss weiterer Bauteile, insbesondere baugleicher Ventilglieder vorgesehen sind. Die Dichtanordnungen können in an sich bekannter Art und Weise angeordnet werden, um die Dichtigkeit des Systems gegenüber dem durchfliessenden Medium zu gewährleisten. Derartige Dichtanordnungen können sowohl im Verbindungsbereich zweier Ventilglieder als auch im Verbindungsbereich von Anschluss- oder Abschlusseinheiten einer aus Ventilgliedern aufgebauten Mehrwege-Ventilanordnung angeordnet sein.

Die Erfindung betrifft ferner ein Verfahren zur Durchflussregelung mindestens eines Ventilglieds vorzugsweise innerhalb einer Mehrwege-Ventilanordnung, wobei mindestens ein Ventilglied, insbesondere durch Drehung einer das Ventilglied durchdringenden Achse, in einem Winkelbereich angewählt und verstellt wird.

Besonders vorteilhaft beinhaltet ein solches Verfahren die folgenden Schritte:
(a) Verschieben der Achse insbesondere mit einer Positioniervorrichtung in eine Ausgangsposition, falls notwendig;
   Unter einer Ausgangsposition wird in diesem Zusammenhang eine definierte Position der Achse in Längsrichtung verstanden. Ein solcher Schritt ist insbesondere erforderlich, falls die Achse nicht mittels insbesondere in einem Abschlussteil vorgesehene Rückstellmittel in einer Ausgangsposition gehalten wird, so lange keine gegensinnige Kraft aufgewendet wird.
(b) Drehung der Achse insbesondere mit einer Positioniervorrichtung auf eine Postion neben der Position des Mitnehmers, insbesondere den Anfangs- oder Endwert des durch den Winkelbereich definierten Verstellbereichs mindestens eines zu verstellenden Ventilglieds;
   Vorteilhafterweise kann die Postion des Mitnehmers insbesondere zentral gespeichert sein. Dadurch, dass eine Position neben dem Mitnehmer angewählt wird, ist eine Fangtoleranz geschaffen, wodurch ggf. mechanisch bedingte Ungenauigkeiten vernachlässigt werden können.
(c) Verschieben der Achse insbesondere mit einer Positioniervorrichtung in eine Fangposition;
   Unter einer Fangposition wird hier und im folgenden eine Ausrichtung der Achse verstanden, in welcher eine an der Achse angeordnete Kupplungsvorrichtung einen insbesondere an dem Innenkörper angeordneten Mitnehmer mindestens berühren kann. Als Positioniervorrichtung können an sich bekannte Vorrichtungen verwendet werden, welche geeignet sind, die Achse in Längsrichtung zu bewegen, z.B. Schrittmotoren.
(d) Drehung der Achse insbesondere mit einer Positioniervorrichtung, bis eine an der Achse angeordnete Kupplungsvorrichtung einen an dem Innenkörper des Ventilglieds angeordneten Mitnehmer erreicht;
   Das Erreichen des Mitnehmers kann in an sich bekannter Art und Weise detektiert werden, z.B. durch eine Zunahme des Drehwiderstands. Selbstverständlich ist es jedoch auch möglich, dass die Position des Mitnehmers insbesondere zentral gespeichert ist und so das Erreichen des Mitnehmers durch Abgleich mit diesem Wert festgestellt wird. Alternativ ist es ebenfalls möglich, die Achse bis zum entgegengesetzten Endpunkt des Winkelbereichs W zu drehen: Eine Detektion des Erreichens des Mitnehmers kann so entfallen.
(e) Verschieben der Achse insbesondere mit einer Positioniervorrichtung in eine Verstellposition;
   Unter einer Verstellposition wird hier und im folgenden eine Position verstanden, in welcher Kupplungsvorrichtung und Mitnehmer derart miteinander verbunden sind, dass eine Verstellbarkeit in beliebiger Drehrichtung gewährleistet ist. Hierfür eignen sich insbesondere gabelartige Kupplungsvorrichtungen mit unterschiedlich langen Fortsätzen.
(f) Drehung der Achse und des Innenkörpers insbesondere mit einer Positioniervorrichtung auf eine Position innerhalb der durch den Winkelbereich definierten Verstellbereichs, wobei optional vorgängig die Anfangs- und die Endposition des Winkelbereichs und deren zugehörige Durchflussraten bestimmt werden.

Durch die Bestimmung der Durchflussraten an den Endpostionen des Winkelbereichs kann exakt der Regelbereich jedes einzelnen Ventilglieds bestimmt werden. Zudem kann an einer zentralen Zu- und/oder Abführleitung der Durchfluss durch das Gesamtsystem bestimmt wird, wodurch die Kontrollierbarkeit und Anpassbarkeit des Systems weiter erhöht werden kann.

Das Verfahren kann mit verschiedensten Durchflussmedien durchgeführt werden, bspw. mit flüssigen oder gasförmigen Medien, insbesondere mit Wasser oder Luft. Dadurch sind vielfältigste Anwendungen möglich, insbesondere in der Heizungs- und Lüftungstechnik, der Bewässerungstechnik und der Rezeptursteurung in der Verfahrenstechnik.

In einer besonders vorteilhaften Ausführungsform der Erfindung erfolgt die Justierung der Achse in Längsrichtung über eine Drehbewegung um eine Hilfsachse, welche orthogonal zur die Ventilglieder durchdringenden Achse liegt. Hierdurch können Längsbewegungen der Achse aus dem Ventilgehäuse bzw. dem Anschluss- und/oder Abschlussteil heraus vermeiden werden, welche ansonsten die Abdichtung erschweren würden. Besonders bevorzugt erfolgt die Justierung der Achse in Längsrichtung mittels eines Exzenters.

Die Erfindung wird nachfolgend anhand von Ausführungsbeispielen und Figuren näher erläutert, ohne dass der Gegenstand der Erfindung auf diese Beispiele zu beschränken wäre. Es zeigen:
- Fig. 1:: Ventilglied im Querschnitt;
- Fig. 2:: Ventilglied im Längsschnitt;
- Fig. 3:: Mehrwege-Ventilanordnung, exemplarisch mit nur einem Ventilglied;
- Fig. 4:: Kupplungsvorrichtung und Mitnehmer in verschiedenen Positionen;
- Fig. 5:: Exzenter;
- Fig. 6:: Schematische Darstellung der Schritte eines Verfahren zum Einstellen eines Ventilglieds.

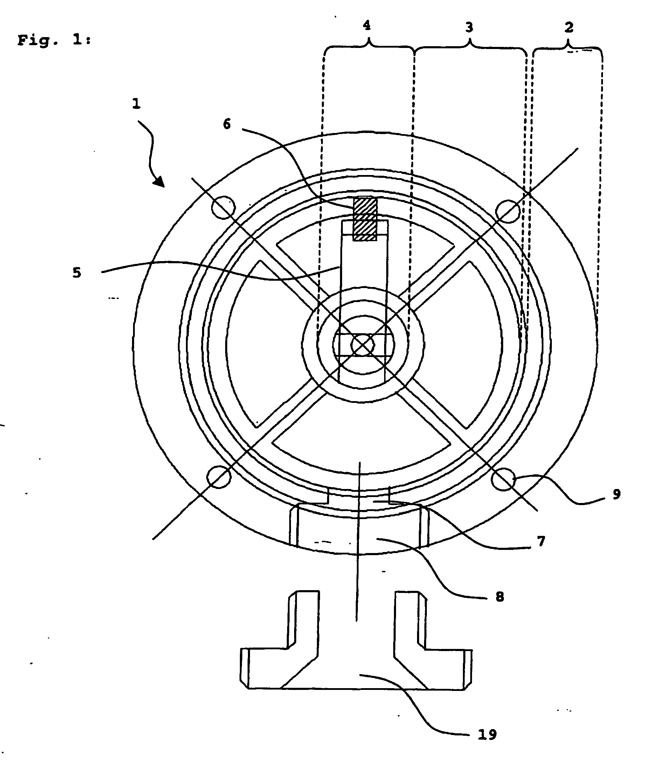

Figur 1 zeigt ein Ventilglied 1 in Längsansicht. Das Ventilglied 1 beinhaltet ein Ventilgehäuse 2 und einen Innenkörper 3. An einer zentralen Achse 4 ist eine Kupplungsvorrichtung 5 angeordnet, welche in einen am Innenkörper 3 angeordneten Mitnehmer 6 reversibel ein- und auskuppelbar ist. Sowohl der Innenkörper 3 als auch das Ventilgehäuse 2 verfügen über Durchlassöffnungen 7 bzw. 8, welche durch Drehung des Innenkörpers 3 in zumindest teilweise Überlappung gebracht werden können. Die Durchlassöffnungen 7 und 8 münden in einen Ablauf 19, welcher bspw. an einen Verbraucher angeschlossen ist. In einem äusseren Bereich des Ventilgehäuses 2 sind Bohrungen 9 angeordnet. Durch diese Bohrungen 9 können weitere Ventilglieder 1 angefügt und bspw. mit einer (nicht gezeigten) Gewindestange dichtend verspannt werden.

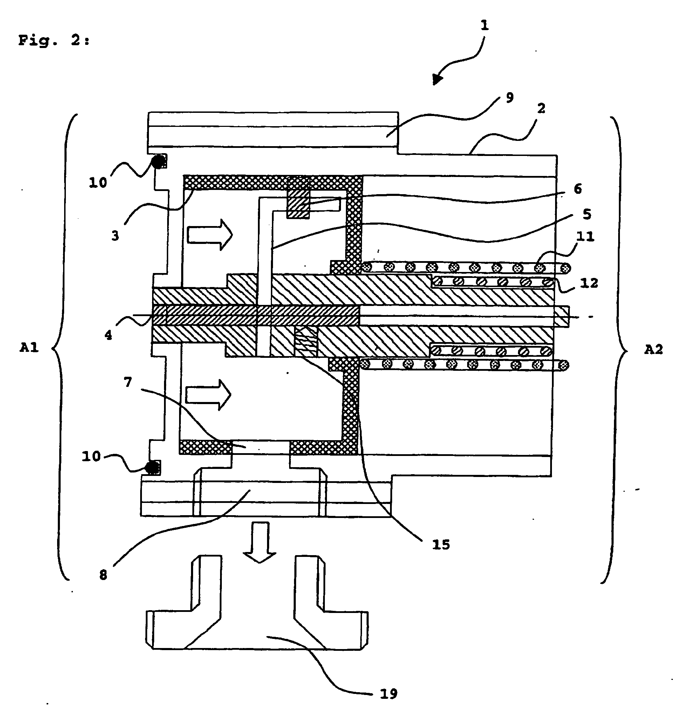

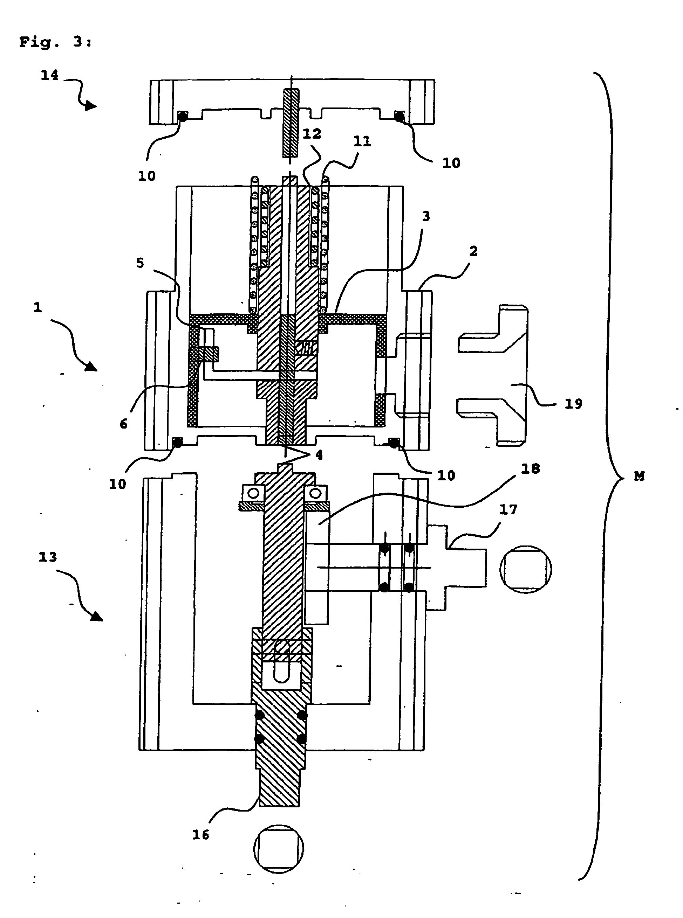

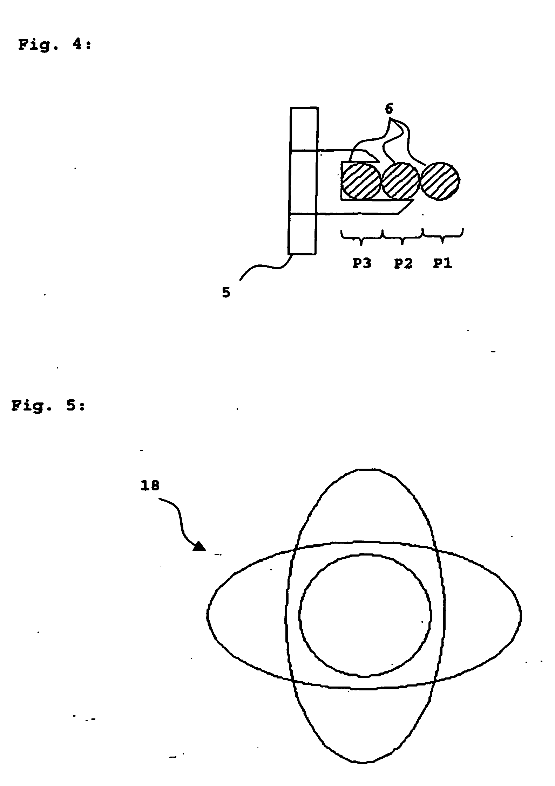

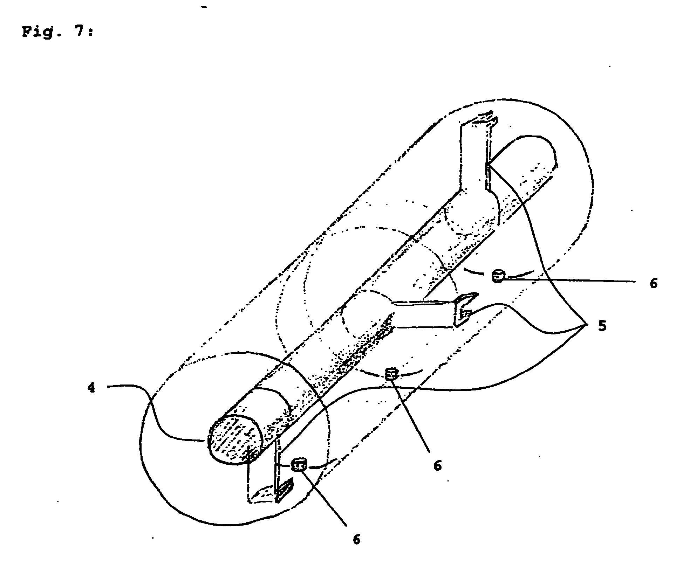

Figur 2 zeigt eine Seitenansicht des Ventilglieds 1 aus Figur 1 im Schnitt. Die Flussrichtung eines durchströmenden Mediums ist exemplarisch mit Pfeilen angedeutet. Das Ventilglied verfügt über eine erste Anschlussseite A1 und eine zweite Anschlussseite A2, an welchen weitere Ventilglieder 1 oder hier nicht gezeigte Anschluss- bzw. Abschlussteile ansetzbar sind (siehe Figur 3). An den Anschlussseiten können zur Gewährleistung einer dichten Verbindung zu weiteren Komponenten Dichtmittel 10, beispielsweise O-Ringe vorgesehen sein. Das Zusammenwirken von Mitnehmer 6 und Kupplungsvorrichtung 5 ist in diesem Seitenschnitt erkennbar; siehe hierzu auch Figuren 4 und 6. Der Innenkörper 3 ist in dem Ausführungsbeispiel axial verschiebbar gegen ein Spannmittel 11, z.B. eine Feder gelagert. Hierdurch können Kräfte, welche beim Einkuppeln der Kupplungsvorrichtung 5 oder durch das durchströmende Medium auf den Innenkörper 3 ausgeübt werden, wirksam ausgeglichen werden. Zudem ist es vorteilhaft, die Achse 4 gegen ein Rückstellmittel 12 zu lagern. In dem Ausführungsbeispiel ist zum Einkuppeln und Auskuppeln der Kupplungsvorrichtung 5 eine Längsbewegung der Achse 4 notwendig. Durch das Rückstellmittel 12 kann eine automatische Rückführung der Achse 4 in eine Ausgangsposition bewirkt werden. Die Achse 4 ist in dem Ausführungsbeispiel modular aus konzentrisch angeordneten Elementen aufgebaut, welche durch eine Verschraubung 15 verdrehgesichert verbunden sind. Hierdurch kann bei Bedarf eine individuelle Einstellung der Verstellbereiche einzelner Ventilglieder bewirkt werden. Zusätzlich oder alternativ kann durch die Verbindung der Achsen 4 zweier Ventilglieder 1 ein Winkel α definiert sein, um welchen die Kupplungsvorrichtungen 5 zweier Ventilglieder 1 gegeneinander verdreht angeordnet sind: Im Falle einer Vierkant-Steckverbindung der Achsen 4 zweier Ventilglieder 1 kann ein Winkel α von 90° bzw. einem Vielfachen dieses Winkels einschl. 0°, also 0°, 90° und 180° bewirkt werden.

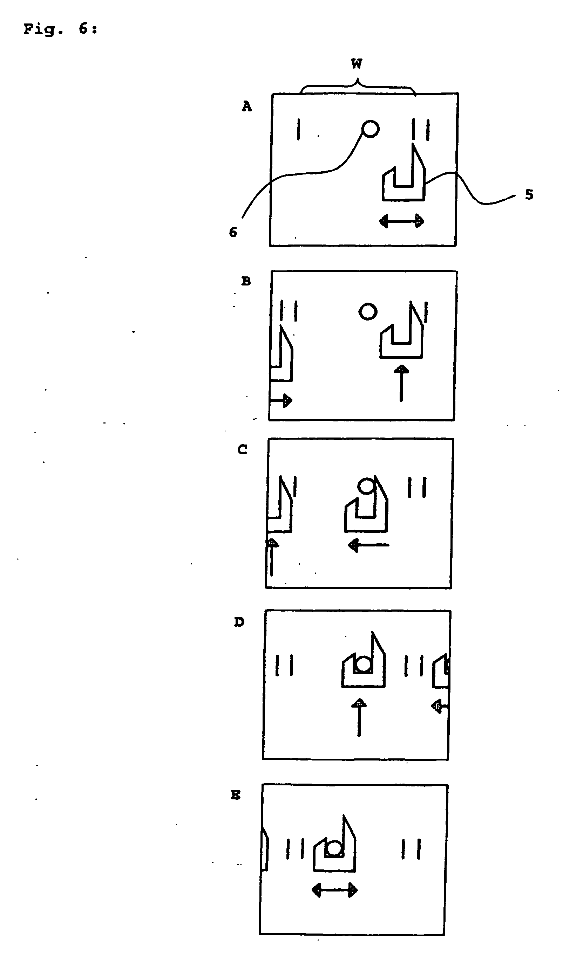

In Figur 3 ist schematisch eine Mehrwege-Ventilanordnung M gezeigt, jedoch aus Gründen der Übersichtlichkeit lediglich mit einem Ventilglied 1, wie in Figur 2 gezeigt. Zudem beinhaltet die Mehrwege-Ventilanordnung ein Anschlussteil 13 und ein Abschlussteil 14. Die Achse 4 ist über eine Steckverbindung aus Innen- und Aussenmehrkantbereichen zusammengesetzt. In dem Anschlussteil ist eine Postioniervorrichtung 16 vorgesehen, mittels welcher die Achse 4 gedreht werden kann. Zudem ist eine Positioniervorrichtung 17 vorgesehen, mittels welcher die Achse 4 in Längsrichtung verschoben werden kann. Vorteilhaftereise werden Längsbewegungen der Postioniervorrichtung 17 entlang von Dichtmitteln vermieden. Hierzu ist ein in Figur 5 im Detail gezeigter Exzenter 18 vorgesehen, mittels welchem die Drehbewegung der Positioniervorrichtung 17 in eine Längsbewegung der Achse 4 umwandelt.

Figur 4 zeigt die verschiedenen relativen Positionen von Kupplungsvorrichtung 5 und Mitnehmer 6 zueinander. In Position P1 ist keine Kupplung zwischen Mitnehmer 6 und Kupplungsvorrichtung 5 möglich; dies entspricht der Ausgangsposition P1 eines Ventilglieds. Durch Längsbewegung der Achse wird die Kupplungsvorrichtung 5 derart verschoben, dass eine Fangposition P2 eingestellt wird, in welcher der Mitnehmer 6 mit einem Fortsatz der Kupplungsvorrichtung 5 erreicht und ggf. in eine Richtung gedreht werden kann. Durch weitere Verschiebung der Achse in Längsrichtung wird der Mitnehmer 6 derart in der Kupplungsvorrichtung 5 angeordnet, dass eine Drehbarkeit des Mitnehmers 6 in beide Richtungen bewirkt ist. Das Verfahren zur Verstellung eines Ventilglieds 1 ist schrittweise in Figur 6 erläutert.

Figur 5 zeigt einen Exzenter 18 in der Draufsicht, welcher vorteilhaft an einer Positioniervorrichtung 17 zur Längsverschiebung der Achse 4 verwendet wird. Hierdurch kann eine Längsbewegung der Positioniervorrichtung 17 und hieraus resultierende Undichtigkeiten vermieden werden. Bei einem solchen Exzenter 18 kann es sich insbesondere sowohl um eine ellipsoide Vorrichtung als auch um eine kreisrunde, jedoch exzentrisch an der Positioniervorrichtung 17 gelagerte Vorrichtung handeln. Als Rückstellmittel für den Exzenter 18 ist in dem Ausführungsbeispiel gemäss Figur 3 das Rückstellmittel 12 vorgesehen. Bei einer Mehrzahl von Ventilgliedern 1 ist es insbesondere vorteilhaft, lediglich an dem der Endabdeckung 14 direkt benachbarten Ventilglied 1 ein solches Rückstellmittel 12 vorzusehen.

Figur 6 zeigt schrittweise das Verfahren zum Einstellen eines Ventilglieds 1. Figur 6A zeigt Mitnehmer 6 und Kupplungsvorrichtung 5 in der Ausgangsposition P1. In der Ausgangsposition P1 die auf der Achse 4 angeordnete Kupplungsvorrichtung 5 mindestens in dem Winkelbereich W drehbar, ohne dass der Mitnehmer 6 erreicht wird. Figur 6B zeigt Mitnehmer 6 und Kupplungsvorrichtung 5 in einer Fangposition P2. Die Fangposition der Kupplungsvorrichtung 5 wird eingestellt durch Längsbewegung der Achse 4. Vorzugsweise wird die Fangposition eingestellt in einem Endpunkt des Winkelbereichs W, welcher dem Verstellbereich des Ventilglieds 1 entspricht. Figur 6C zeigt das Heranfahren der Kupplungsvorrichtung 5 an den Mitnehmer 6. Ist der Mitnehmer 6 erreicht, wird durch Längsverschiebung der Achse 4 die Verstellposition P3 eingestellt (Figur 6D). In dieser Position ist eine Verstellbarkeit des Mitnehmers 6 in beide Drehrichtungen innerhalb des gesamten Winkelbereichs W gewährleistet (Figur 6E).

Figur 7 zeigt schematisch eine mögliche Anordnung von Betätigungsmitteln, hier Kupplungsvorrichtungen 5 an einer Achse 4. Die Kupplungsvorrichtungen 5 sind kompatibel zu Mitnehmern 6 einzelner Ventilglieder entlang der Achse 4 angeordnet, in dem Ausführungsbeispiel jeweils um einen Winkel α von 90° versetzt. Hierbei kann der Versetzungswinkel der Betätigungsmittel auf verschiedene Art und Weise beliebige sein: Die Betätigungsmittel können bspw. fest auf der Achse 4 angeordnet sein, wobei der Versetzungswinkel der einzelnen Betätigungsmittel über das Zusammenfügen der Achse 4 aus Segmenten bewirkt wird, z.B. mit einem Mehrkant-System. Alternativ und insbesondere zusätzlich ist es aber auch möglich, die Betätigungsmittel verstellbar auf der Achse anzuordnen, bspw. mittels einer insbesondere stufenlosen Verschraubung der Betätigungsmittel auf der Achse 4. Selbstverständlich kann auch vorgesehen sein, dass mehrere Betätigungsmittel nicht versetzt angeordnet sind, falls gewünscht ist, dass diese gleichzeitig betätigt werden.

## Patentansprüche

1. Mehrwege-Ventilanordnung (M) zur Durchflussregelung, mit mindestens zwei Ventilgliedern (1) und mit Betätigungsmitteln zum Betätigen der Ventilglieder (1), **dadurch gekennzeichnet, dass** die Betätigungsmittel und die Ventilglieder (1) derart angeordnet sind, dass in Abhängigkeit von der Position der Betätigungsmittel, insbesondere in Abhängigkeit von dem Winkelbetrag einer Drehung der Betätigungsmittel, wenigstens ein vorbestimmtes Ventilglied (1) anwählbar und betätigbar ist.

2. Mehrwege-Ventilanordnung (M) nach Anspruch 1, **dadurch gekennzeichnet, dass**
■ die Ventilglieder (1) über eine erste Anschlussseite (A1) und eine zweite Anschlussseite (A2) miteinander unter einem Winkel α bzw. einem Vielfachen des Winkels α gegeneinander verdreht miteinander verbunden sind, und/oder
■ die Ventilglieder (1) derart miteinander verbunden sind, dass deren Betätigungsmittel unter einem Winkel α bzw. einem Vielfachen des Winkels α gegeneinander verdreht sind.

3. Mehrwege-Ventilanordnung (M) nach Anspruch 1 oder 2, **dadurch gekennzeichnet, dass** eine zentrale, insbesondere aus Teilbereichen einzelner Ventilglieder (1) gebildete Achse (4) vorgesehen ist, welche die Ventilglieder (1) durchdringt, und mittels welcher einzelner Ventilglieder (1) selektiv ansteuerbar und betätigbar sind.

4. Mehrwege-Ventilanordhung (M) nach Anspruch 3, **dadurch gekennzeichnet, dass** insbesondere an der Achse (4) angeordnete Kupplungsvorrichtungen (5) vorgesehen sind, welche derart kompatibel zu insbesondere an Innenkörper (3) der jeweiligen Ventilglieder (1) angeordneten Mitnehmern (6) ausgebildet sind, dass eine selektive Verstellung der Betriebspositionen der einzelnen Ventilglieder (1) bewirkbar ist.

5. Mehrwege-Ventilanordnung (M) nach Anspruch 3 oder 4, **dadurch gekennzeichnet, dass** der Durchfluss durch einzelne Ventilglieder (1) durch Drehung der Achse (4) in einem Winkelbereich (W) regelbar ist.

6. Mehrwege-Ventilanordnung (M) nach einem der Ansprüche 1 bis 5, **dadurch gekennzeichnet, dass** einzelne Ventilglieder (1) und ggf. ein Anschlussteil (13) und/oder ein Abschlussteil (14) über eine insbesondere aussen liegende Gewindestange miteinander verbunden sind.

7. Mehrwege-Ventilanordnung (M) nach einem der Ansprüche 3 bis 6, **dadurch gekennzeichnet, dass** die Achse (4) in Längsrichtung insbesondere gegen ein vorzugsweise innerhalb eines Abschlussteils (14) vorgesehenes Rückstellmittel (12) verschiebbar ausgebildet ist.

8. Mehrwege-Ventilanordnung (M) nach einem der Ansprüche 1 bis 7, **dadurch gekennzeichnet, dass** ein Anschlussteil (13) vorgesehen ist, welches eine Positioniervorrichtung (16) zur Drehung der die Ventilglieder durchdringenden Achse (4) sowie eine Positioniervorrichtung (17) zum Verschieben der Achse (4) in Richtung ihrer Längsachse beinhaltet.

9. Mehrwege-Ventilanordnung (M) nach einem der Ansprüche 1 bis 8, **dadurch gekennzeichnet, dass** sowohl der Zufluss auch der Abfluss eines zu regelnden Gesamtsystems über Ventilglieder (1) regelbar ist.

10. Mehrwege-Ventilanordnung (M) nach einem der Ansprüche 1 bis 9 mit einer ersten Anschlussseite (A1) und einer zweiten Anschlussseite (A2) des Ventilglieds (1) zum Anschluss weiterer, insbesondere baugleicher Ventilglieder (1), und mit einem zumindest teilweise zu der ersten Anschlussseite (A1) und zweiten Anschlussseite (A2) offenen Ventilgehäuse (2) des Ventilglieds (1) sowie einem gegen das Ventilgehäuse (2) verdrehbaren Innenkörper (3) des Ventilglieds (1) wobei
■ die Anschlussseiten (A1, A2) derart ausgebildet sind, dass weitere Ventilglieder (1) unter einem vorgegebenen Winkel α bzw. einem Vielfachen des Winkels α gegeneinander verdreht anschliessbar sind und/oder
■ das Ventilglied (1) derart ausgebildet ist, dass Betätigungsmittel weiterer Ventilglieder (1) unter einem Winkel α bzw. einem Vielfachen des Winkels α gegeneinander verdreht anschliessbar sind,
**dadurch gekennzeichnet, dass** der Innenkörper (3) gegenüber dem Ventilgehäuse (2) mittels eines an dem Innenkörper (3) angeordneten Mitnehmers (6) insbesondere lediglich auf einen Teilbereich einer vollen Umdrehung begrenzt verdrehbar ist.

11. Mehrwege-Ventilanordnung (M) nach Anspruch 10, wobei der Innenkörper (3) über mindestens eine Durchtrittsöffnung (7) verfügt, welche mit mindestens einer Durchtrittsöffnung (8) des Ventilgehäuses (2) in zumindest teilweise Überlappung gebracht werden kann.

12. Mehrwege-Ventilanordnung (M) nach Anspruch 11, **dadurch gekennzeichnet, dass** der Mitnehmer (6) in eine Kupplungsvorrichtung (5) reversibel ein- und auskuppelbar ausgebildet ist.

13. Mehrwege-Ventilanordnung (M) nach Anspruch 12, **dadurch gekennzeichnet, dass** die Kupplungsvorrichtung (5) an einer Achse (4) angeordnet ist, welche das Ventilglied (1) von der ersten Anschlussseite (A1) zur zweiten Anschlussseite (A2) hin durchdringt.

14. Mehrwege-Ventilanordnung (M) nach Ansprüche 13, **dadurch gekennzeichnet**, das der Durchfluss durch das Ventilglied (1) durch Drehung der Achse (4) in einem Winkelbereich (W) regelbar ist.

15. Mehrwege-Ventilanordnung (M) nach Anspruch 13 oder 14, **dadurch gekennzeichnet, dass** die Achse (4) derart ausgebildet ist, dass sie im Bereich der ersten Anschlussseite (A1) und/oder zweiten Anschlussseite (A2) mit der Achse (4) mindestens eines weiteren Ventilglieds (1) verbindbar ist.

16. Mehrwege-Ventilanordnung (M) nach einem der Ansprüche 10 bis 15, **dadurch gekennzeichnet, dass** der Winkel α durch selektiv kompatible Bereiche des Ventilgehäuses (2) und/oder der Achse (4) im Bereich der ersten Anschlussfläche (A1) und/oder der zweiten Anschlussfläche (A2) definiert ist, wobei die Kupplungsvorrichtung (5) mindestens eines weiteren, insbesondere baugleichen Ventilglieds (1) unter einem Winkel α bzw. einem Vielfachen des Winkel α verdreht anordbar sind.

17. Mehrwege-Ventilanordnung (M) nach einem der Ansprüche 10 bis 16, **dadurch gekennzeichnet, dass** Ventilgehäuse (2) und Innenkörper (3) aus Materialien mit gleichem Wärmeausdehnungskoeffizient, insbesondere aus dem gleichen Material, vorzugsweise aus insbesondere warm verformtem Messing bestehen.

18. Mehrwege-Ventilanordnung (M) nach einem der Ansprüche 10 bis 17, **dadurch gekennzeichnet, dass** der Innenkörper (2) zwischen erster Anschlussseite (A1) und zweiter Anschlussseite (A2) gegen eine Spannvorrichtung (11) verschiebbar ausgebildet ist.

19. Mehrwege-Ventilanordnung (M) nach einem der Ansprüche 10 bis 18, **dadurch gekennzeichnet, dass** am Ventilgehäuse (2) im Bereich der ersten Anschlussseite (A1) und/oder der zweiten Anschlussseite (A2) insbesondere separate Dichtanordnungen (10), vorzugsweise O-Ringe zum dichten Anschluss weiterer Bauteile, insbesondere baugleicher Ventilglieder (1) vorgesehen sind.

20. Verfahren zur Durchflussregelung mindestens eines Ventilglieds (1) innerhalb einer Mehrwege-Ventilanordnung (M) nach einem der Ansprüche 1 bis 9, **dadurch gekennzeichnet, dass** mindestens ein Ventilglied (1), insbesondere durch Drehung einer das Ventilglied (1) durchdringenden Achse (4), in einem Winkelbereich (W) angewählt und verstellt wird.

21. Verfahren nach Anspruch 20 mit den folgenden Schritten:
(a) Justierung der Achse (4) insbesondere mit einer Positioniervorrichtung (16, 17) in einer Ausgangsposition (P1), falls notwendig;
(b) Drehung der Achse (4) insbesondere mit einer Positioniervorrichtung (16) auf eine Position neben der Position des Mitnehmers (6), insbesondere den Anfangs- oder Endwert des durch den Winkelbereich (W) definierten Verstellbereichs mindestens eines Ventilglieds (1);
(c) Justierung der Achse (4) insbesondere mit einer Positioniervorrichtung (17) in einer Fangposition (P2);
(d) Drehung der Achse (4) insbesondere mit einer Positioniervorrichtung (16), bis eine an der Achse (4) angeordnete Kupplungsvorrichtung (5) einen an dem Innenkörper (3) des Ventilglieds (1) angeordneten Mitnehmer (6) erreicht;
(e) Justierung der Achse (4) insbesondere mit einer Positioniervorrichtung (17) in einer Verstellposition (P3);
(f) Drehung der Achse (4) und des Innenkörpers (3) insbesondere mit einer Positioniervorrichtung (16) auf eine Position innerhalb des durch den Winkelbereich (W) definierten Verstellbereichs, wobei optional vorgängig die Anfangs- und die Endposition des Winkelbereichs (W) und deren zugehörige Durchflussraten bestimmt werden.

22. Verfahren nach Anspruch 20 oder 21, **dadurch gekennzeichnet, dass** es sich bei dem zu regelnden Durchflussmedium um ein flüssiges oder gasförmiges Medium, insbesondere um Wasser oder Luft handelt.

23. Verfahren nach einem der Ansprüche 20 bis 22, **dadurch gekennzeichnet, dass** an einer zentralen Zu- und/oder Abführleitung der Durchfluss durch das Gesamtsystem bestimmt wird.

24. Verfahren nach einem der Ansprüche 20 bis 23, **dadurch gekennzeichnet, dass** die Justierung der Achse (4) über eine Drehbewegung um eine Hilfsachse erfolgt, welche orthogonal zur Achse (4) liegt.

25. Verwendung einer Mehrwege-Ventilanordnung (M) nach einem der Ansprüche 1 bis 19 zur Durchflussregelung in der Kühl- und/oder Heizregelung unter Verwendung von flüssigen oder gasförmigen Medien.

## Claims

1. Multi-way valve arrangement (M) for throughflow regulation, with at least two valve members (1) and with actuating means for the actuation of the valve members (1), **characterized in that** the actuating means and the valve members (1) are arranged in such a way that at least one predetermined valve member (1) can be selected and can be actuated as a function of the position of the actuating means, in particular as a function of the angle of a rotation of the actuating means.

2. Multi-way valve arrangement (M) according to Claim 1, **characterized in that**
- the valve members (1) are connected to one another, rotated at an angle α or a multiple of the angle α with respect to one another, via a first connection side (A1) and a second connection side (A2), and/or
- the valve members (1) are connected to one another in such a way that their actuating means are rotated at an angle α or a multiple of the angle α with respect to one another.

3. Multi-way valve arrangement (M) according to Claim 1 or 2, **characterized in that** a central shaft (4) formed particularly from part-regions of individual valve members (1) is provided, which penetrates through the valve members (1) and by means of which individual valve members (1) can be selectively activated and actuated.

4. Multi-way valve arrangement (M) according to Claim 3, **characterized in that** coupling devices (5) arranged particularly on the shaft (4) are provided, which are designed compatibly with drivers (6), arranged particularly on inner bodies (3) of the respective valve members (1), in such a way that a selective adjustment of the operating positions of the individual valve members (1) can be brought about.

5. Multi-way valve arrangement (M) according to Claim 3 or 4, **characterized in that** the throughflow through individual valve members (1) can be regulated by the shaft (4) being rotated in an angular range (W).

6. Multi-way valve arrangement (M) according to one of Claims 1 to 5, **characterized in that** individual valve members (1) and, if appropriate, a connection part (13) and/or a closing-off part (14) are connected to one another via a particularly external threaded rod.

7. Multi-way valve arrangement (M) according to one of Claims 3 to 6, **characterized in that** the shaft (4) is designed to be displaceable in the longitudinal direction, particularly counter to a restoring means (12) provided preferably within a closing-off part (14).

8. Multi-way valve arrangement (M) according to one of Claims 1 to 7, **characterized in that** a connection part (13) is provided, which contains a positioning device (16) for the rotation of the shaft (4) penetrating through the valve members and a positioning device (17) for the displacement of the shaft (4) in the direction of its longitudinal axis.

9. Multi-way valve arrangement (M) according to one of Claims 1 to 8, **characterized in that** both the inflow and the outflow of an overall system to be regulated can be regulated via valve members (1).

10. Multi-way valve arrangement (M) according to one of Claims 1 to 9, with a first connection side (A1) and a second connection side (A2) of the valve member (1) for the connection of further, particularly structurally identical valve members (1), and with a valve housing (2), open at least partially to the first connection side (A1) and second connection side (A2), of the valve member (1), and also with an inner body (3), rotatable relative to the valve housing (2), of the valve member (1),
- the connection sides (A1, A2) being designed in such a way that further valve members (1) can be connected, rotated at a predetermined angle α or a multiple of the angle α with respect to one another, and/or
- the valve member (1) being designed in such a way that actuating means of further valve members (1) can be connected, rotated at an angle α or a multiple of the angle α with respect to one another,
**characterized in that** the inner body (3) can be rotated with respect to the valve housing (2) by means of a driver (6) arranged on the inner body (3), particularly in a way limited to only a part-region of a full revolution.

11. Multi-way valve arrangement (M) according to Claim 10, the inner body (3) having at least one passage orifice (7) which can be brought into at least partial overlap with at least one passage orifice (8) of the valve housing (2).

12. Multi-way valve arrangement (M) according to Claim 11, **characterized in that** the driver (6) is designed to be reversibly engageable into and disengageable from a coupling device (5).

13. Multi-way valve arrangement (M) according to Claim 12, **characterized in that** the coupling device (5) is arranged on a shaft (4) which penetrates through the valve member (1) from the first connection side (A1) to the second connection side (A2).

14. Multi-way valve arrangement (M) according to Claim 13, **characterized in that** the throughflow through the valve member (1) can be regulated in an angular range (W) by the shaft (4) being rotated.

15. Multi-way valve arrangement (M) according to Claim 13 or 14, **characterized in that** the shaft (4) is designed in such a way that it can be connected to the shaft (4) of at least one further valve member (1) in the region of the first connection side (A1) and/or second connection side (A2).

16. Multi-way valve arrangement (M) according to one of Claims 10 to 15, **characterized in that** the angle α is defined by selectively compatible regions of the valve housing (2) and/or of the shaft (4) in the region of the first connection face (A1) and/or of the second connection face (A2), the coupling device (5) of at least one further, particularly structurally identical valve member (1) being cable of being arranged, rotated at an angle α or a multiple of the angle α.

17. Multi-way valve arrangement (M) according to one of Claims 10 to 16, **characterized in that** the valve housing (2) and inner body (3) consist of materials with an identical coefficient of thermal expansion, in particular of the same material, preferably of particularly hot-formed brass.

18. Multi-way valve arrangement (M) according to one of Claims 10 to 17, **characterized in that** the inner body (2) is designed to be displaceable between the first connection side (A1) and second connection side (A2) counter to a tensioning device (11).

19. Multi-way valve arrangement (M) according to one of Claims 10 to 18, **characterized in that** particularly separate sealing arrangements (10), preferably O-rings, for the leaktight connection of further components, particularly structurally identical valve members (1) are provided on the valve housing (2) in the region of the first connection side (A1) and/or of the second connection side (A2).

20. Method for the throughflow regulation of at least one valve member (1) within a multi-way valve arrangement (M) according to one of Claims 1 to 9, **characterized in that** at least one valve member (1) is selected and adjusted in an angular range (W), particularly by the rotation of a shaft (4) penetrating through the valve member (1).

21. Method according to Claim 20, with the following steps:
(a) adjustment of the shaft (4), particularly by means of a positioning device (16, 17) in an initial position (P1), if necessary;
(b) rotation of the shaft (4), particularly by means of a positioning device (16), to a position next to the position of the driver (6), particularly the initial or final value of the adjustment range, defined by the angular range (W), of at least one valve member (1);
(c) adjustment of the shaft (4), particularly by means of a positioning device (17), in a catching position (P2);
(d) rotation of the shaft (4), particularly by means of a positioning device (16), until a coupling device (5) arranged on the shaft (4) reaches a driver (6) arranged on the inner body (3) of the valve member (1);
(e) adjustment of the shaft (4), particularly by means of a positioning device (17), in an adjusting position (P3);
(f) rotation of the shaft (4) and of the inner body (3), particularly by means of a positioning device (16), to a position within the adjustment range defined by the angular range (W), optionally the initial and the final position of the angular range (W) and their associated throughflow rates being previously determined.

22. Method according to Claim 20 or 21, **characterized in that** the throughflow medium to be regulated is a liquid or gaseous medium, in particular water or air.

23. Method according to one of Claims 20 to 22, **characterized in that** the throughflow through the overall system is determined on a central supply and/or discharge line.

24. Method according to one of Claims 20 to 23, **characterized in that** the adjustment of the shaft (4) takes place via a rotational movement about an auxiliary axis which lies orthogonally to the shaft (4).

25. Use of a multi-way valve arrangement (M) according to one of Claims 1 to 19 for throughflow regulation in cooling and/or heating regulation, using liquid or gaseous media.

## Revendications

1. Système de soupape à plusieurs voies (M) pour la régulation du débit, comprenant au moins deux organes de soupape (1) et des moyens d'actionnement pour actionner les organes de soupape (1), **caractérisé en ce que** les moyens d'actionnement et les organes de soupape (1) sont disposés de telle sorte qu'en fonction de la position des moyens d'actionnement, notamment en fonction de la valeur angulaire d'une rotation des moyens d'actionnement, au moins un organe de soupape prédéfini (1) puisse être choisi et actionné.

2. Système de soupape à plusieurs voies (M) selon la revendication 1, **caractérisé en ce que**
- les organes de soupape (1) sont connectés l'un à l'autre par le biais d'un premier côté de raccordement (A1) et d'un deuxième côté de raccordement (A2) de manière tournée l'un par rapport à l'autre suivant un angle α ou un multiple de l'angle α, et/ou
- les organes de soupape (1) sont connectés l'un à l'autre de telle sorte que leurs moyens d'actionnement soient tournés l'un par rapport à l'autre suivant un angle α ou un multiple de l'angle α.

3. Système de soupape à plusieurs voies (M) selon la revendication 1 ou 2, **caractérisé en ce qu'**il est prévu un axe central (4) notamment formé de zones partielles d'organes de soupape individuels (1), qui traverse les organes de soupape (1) et au moyen duquel des organes de soupape individuels (1) peuvent être commandés et actionnés de manière sélective.

4. Système de soupape à plusieurs voies (M) selon la revendication 3, **caractérisé en ce que** l'on prévoit des dispositifs d'accouplement (5) disposés notamment sur l'axe (4), lesquels sont réalisés de manière compatible à des dispositifs d'entraînement (6) disposés notamment sur des corps internes (3) de chaque organe de soupape (1) de telle sorte qu'un réglage sélectif des positions de fonctionnement des organes de soupape individuels (1) puisse être effectué.

5. Système de soupape à plusieurs voies (M) selon la revendication 3 ou 4, **caractérisé en ce que** le débit à travers des organes de soupape individuels (1) peut être régulé par rotation de l'axe (4) suivant une plage angulaire (W).

6. Système de soupape à plusieurs voies (M) selon l'une quelconque des revendications 1 à 5, **caractérisé en ce que** des organes de soupape individuels (1) et éventuellement une partie de raccordement (13) et/ou une partie de terminaison (14) sont connectés mutuellement par le biais d'une tige filetée située notamment à l'extérieur.

7. Système de soupape à plusieurs voies (M) selon l'une quelconque des revendications 3 à 6, **caractérisé en ce que** l'axe (4) est réalisé de manière déplaçable dans la direction longitudinale, notamment contre un moyen de rappel (12) prévu de préférence à l'intérieur d'une partie de terminaison (14).

8. Système de soupape à plusieurs voies (M) selon l'une quelconque des revendications 1 à 7, **caractérisé en ce qu'**une partie de raccordement (13) est prévue, laquelle contient un dispositif de positionnement (16) pour faire tourner l'axe (4) traversant les organes de soupape ainsi qu'un dispositif de positionnement (17) pour déplacer l'axe (4) dans la direction de son axe longitudinal.

9. Système de soupape à plusieurs voies (M) selon l'une quelconque des revendications 1 à 8, **caractérisé en ce que** l'afflux et l'évacuation d'un système total à réguler peuvent être réglés par le biais d'organes de soupape (1).

10. Système de soupape à plusieurs voies (M) selon l'une quelconque des revendications 1 à 9, comprenant un premier côté de raccordement (A1) et un deuxième côté de raccordement (A2) de l'organe de soupape (1) pour le raccordement d'autres organes de soupape (1), notamment de même construction, et comprenant un boîtier de soupape (2) de l'organe de soupape (1) ouvert au moins partiellement vers le premier côté de raccordement (A1) et le deuxième côté de raccordement (A2), ainsi qu'un corps interne de l'organe de soupape (1) pouvant tourner par rapport au boîtier de soupape (2), dans lequel :
- les côtés de raccordement (A1, A2) sont réalisés de telle sorte que d'autres organes de soupape (1) puissent être raccordés de manière tournée l'un par rapport à l'autre suivant un angle α prédéterminé ou un multiple de l'angle α, et/ou
- l'organe de soupape (1) est réalisé de telle sorte que des moyens d'actionnement d'autres organes de soupape (1) puissent être raccordés de manière tournée l'un par rapport à l'autre suivant un angle α ou un multiple de l'angle α,
**caractérisé en ce que** le corps interne (3) peut tourner de manière limitée, notamment uniquement sur une zone partielle d'une rotation complète, par rapport au boîtier de soupape (2) au moyen d'un dispositif d'entraînement (6) disposé sur le corps interne (3).

11. Système de soupape à plusieurs voies (M) selon la revendication 10, dans lequel le corps interne (3) dispose d'au moins une ouverture de passage (7) qui peut être amenée au moins à chevaucher partiellement au moins une ouverture de passage (8) du boîtier de soupape (2).

12. Système de soupape à plusieurs voies (M) selon la revendication 11, **caractérisé en ce que** le dispositif d'entraînement (6) est réalisé de manière à pouvoir être accouplé et désaccouplé de manière réversible dans un dispositif d'accouplement (5).

13. Système de soupape à plusieurs voies (M) selon la revendication 12, **caractérisé en ce que** le dispositif d'accouplement (5) est disposé sur un axe (4) qui traverse l'organe de soupape (1) depuis le premier côté de raccordement (A1) jusqu'au deuxième côté de raccordement (A2).

14. Système de soupape à plusieurs voies (M) selon la revendication 13, **caractérisé en ce que** le débit à travers l'organe de soupape (1) peut être régulé par rotation de l'axe (4) dans une plage angulaire (W).

15. Système de soupape à plusieurs voies (M) selon la revendication 13 ou 14, **caractérisé en ce que** l'axe (4) est réalisé de telle sorte qu'il puisse être connecté dans la région du premier côté de raccordement (A1) et/ou du deuxième côté de raccordement (A2) à l'axe (4) d'au moins un autre organe de soupape (1).

16. Système de soupape à plusieurs voies (M) selon l'une quelconque des revendications 10 à 15, **caractérisé en ce que** l'angle α est défini par des plages sélectivement compatibles du boîtier de soupape (2) et/ou de l'axe (4) dans la région de la première surface de raccordement (A1) et/ou de la deuxième surface de raccordement (A2), le dispositif d'accouplement (5) d'au moins un autre organe de soupape (1), notamment de même construction, pouvant être disposé de manière tournée suivant un angle α ou un multiple de l'angle α.

17. Système de soupape à plusieurs voies (M) selon l'une quelconque des revendications 10 à 16, **caractérisé en ce que** le boîtier de soupape (2) et le corps interne (3) se composent de matériaux ayant le même coefficient de dilatation thermique, notamment du même matériau, de préférence de laiton notamment déformé à chaud.

18. Système de soupape à plusieurs voies (M) selon l'une quelconque des revendications 10 à 17, **caractérisé en ce que** le corps interne (2) est réalisé de manière déplaçable entre le premier côté de raccordement (A1) et le deuxième côté de raccordement (A2) contre un dispositif de serrage (11).

19. Système de soupape à plusieurs voies (M) selon l'une quelconque des revendications 10 à 18, **caractérisé en ce que** l'on prévoit sur le boîtier de soupape (2) dans la région du premier côté de raccordement (A1) et/ou du deuxième côté de raccordement (A2) notamment des dispositifs d'étanchéité séparés (10), de préférence des joints toriques pour le raccordement étanche d'autres composants, notamment d'organes de soupape (1) de même construction.

20. Procédé pour la régulation du débit d'au moins un organe de soupape (1) à l'intérieur d'un système de soupape à plusieurs voies (M) selon l'une quelconque des revendications 1 à 9, **caractérisé en ce qu'**au moins un organe de soupape (1) est choisi et réglé, notamment par rotation d'un axe (4) traversant l'organe de soupape (1), dans une plage angulaire (W).

21. Procédé selon la revendication 20, ayant les étapes suivantes:
(a) ajustement de l'axe (4) notamment avec un dispositif de positionnement (16, 17) dans une position de départ (P1), si nécessaire ;
(b) rotation de l'axe (4) notamment avec un dispositif de positionnement (16) dans une position à côté de la position du dispositif d'entraînement (6), notamment à la valeur de départ ou terminale de la zone de réglage définie par la plage angulaire (W) d'au moins un organe de soupape (1) ;
(c) ajustement de l'axe (4) notamment avec un dispositif de positionnement (17) dans une position de capture (P2) ;
(d) rotation de l'axe (4) notamment avec un dispositif de positionnement (16), jusqu'à ce qu'un dispositif d'accouplement (5) disposé sur l'axe (4) atteigne un dispositif d'entraînement (6) disposé sur le corps interne (3) de l'organe de soupape (1) ;
(e) ajustement de l'axe (4) notamment avec un dispositif de positionnement (17) dans une position de réglage (P3) ;
(f) rotation de l'axe (4) et du corps interne (3) notamment avec un dispositif de positionnement (16) dans une position à l'intérieur de la zone de réglage définie par la plage angulaire (W), la position de départ ou terminale de la plage angulaire (W) et son débit associé étant éventuellement déterminés au préalable.

22. Procédé selon la revendication 20 ou 21, **caractérisé en ce que** le milieu s'écoulant à réguler est un milieu gazeux ou liquide, notamment de l'eau ou de l'air.

23. Procédé selon l'une quelconque des revendications 20 à 22, **caractérisé en ce que** le débit à travers l'ensemble du système est déterminé au niveau d'une conduite centrale d'amenée et/ou d'évacuation.

24. Procédé selon l'une quelconque des revendications 20 à 23, **caractérisé en ce que** l'ajustement de l'axe (4) s'effectue par le biais d'un mouvement de rotation autour d'un axe auxiliaire qui est perpendiculaire à l'axe (4).

25. Utilisation d'un système de soupape à plusieurs voies (M) selon l'une quelconque des revendications 1 à 19, pour la régulation du débit dans le réglage de refroidissement et/ou de chauffage en utilisant des milieux liquides ou gazeux.
